# EUROPEAN PATENT APPLICATION

(11) **EP 2 851 773 A1**
(43) Date of publication of application: **25.03.2015**
(21) Application number: 13809614.4
(22) Date of filing: 24.01.2013
(51) Int. Cl.: G06F 3/0481, G06F 3/041

(54) **WIDGET SETTING METHOD AND TERMINAL DEVICE**

(30) Priority: 29.06.2012 CN 201210220039
(71) Applicant: Huawei Device Co., Ltd., Longgang District Shenzhen Guangdong 518129 (CN)
(72) Inventor: LIU, Weijie, Shenzhen Guangdong 518129 (CN)
(74) Representative: Lord, Michael
(86) International application number: PCT/CN2013/070950
(87) International publication number: WO 2014/000445

(57) **Abstract**

Embodiments of the present invention provide a widget setting method and a terminal device. The method includes: presenting a widget setting interface on a display device based on first input, where the first input is used to select the widget setting interface, and the widget setting interface includes a widget setting region; and presenting a widget unit in a first setting sub-region based on second input, where the second input is used to select the widget unit and select the first setting sub-region that is used to present the widget unit and belongs to the widget setting region, and the widget unit is mapped to at least one application program. In the widget setting method and the terminal device provided in the embodiments of the present invention, a shape, content, and a mapped application program of a home screen widget can be user-defined, which meets a requirement of a user.

## Description

This application claims priority to Chinese Patent Application No. 201210220039.5, filed with the Chinese Patent Office on June 29, 2012 and entitled "WIDGET SETTING METHOD AND TERMINAL DEVICE", which is incorporated herein by reference in its entirety.

### TECHNICAL FIELD

The present invention relates to the field of communications, and more specifically, to a widget setting method and a terminal device.

### BACKGROUND

In recent years, mobile terminals undergo a development boom, and various terminals that have a novel function emerge one after another. For home screen widget (widget) setting, a user can place a kind of favorite home screen widget on a home screen, such as weather, time, news, mail, music, and contact widgets, which not only facilitates information viewing, but also shows personalization of the user.

However, in the prior art, content, a shape, and a mapped application program of each widget are all preset by a system, and cannot be edited or modified.

### SUMMARY

Embodiments of the present invention provide a widget setting method and a terminal device, so that a home screen widget of a terminal device can be user-defined.

According to one aspect, a widget setting method is provided. The method includes: presenting a widget setting interface on a display device based on first input, where the first input is used to select the widget setting interface, and the widget setting interface includes a widget setting region; and presenting a widget unit in a first setting sub-region based on second input, where the second input is used to select the widget unit and select the first setting sub-region that is used to present the widget unit and belongs to the widget setting region, and the widget unit is mapped to at least one application program.

According to another aspect, a terminal device is provided. The terminal device includes: an input apparatus, configured to generate first input, where the first input is used to select a widget setting interface, and the widget setting interface includes a widget setting region; a processor, configured to instruct, based on the first input generated by the input apparatus, a display to present the widget setting interface; and the display, configured to present the widget setting interface according to an instruction of the processor. The input apparatus is further configured to generate second input, where the second input is used to select a widget unit and select a first setting sub-region that is used to present the widget unit and belongs to the widget setting region, and the widget unit is mapped to at least one application program; the processor is further configured to instruct, according to the second input generated by the input apparatus, the display to present the widget unit in the first setting sub-region; and the display is further configured to present the widget unit in the first setting sub-region according to an instruction of the processor.

Based on the foregoing embodiments, in the widget setting method and the terminal device provided in the embodiments of the present invention, a widget setting region used by a user to set a home screen widget is presented on a display device, and a widget unit selected by the user is presented in a corresponding region of the widget setting region according to input of the user; therefore, content, a shape, and a mapped application program of the home screen widget of the terminal device can be user-defined, which meets a requirement of the user.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a widget setting method according to an embodiment of the present invention;
FIG. 2(a) to FIG. 2(c) are a schematic diagram, presented in an animation manner, of a widget setting method according to an embodiment of the present invention;
FIG. 3 is a schematic flowchart of a widget setting method according to another embodiment of the present invention;
FIG. 4(a) to FIG. 4(c) are a schematic diagram, in an animation manner, of a widget setting method presented according to another embodiment of the present invention;
FIG. 5(a) to FIG. 5(c) are a schematic diagram, in an animation manner, of a widget setting method presented according to another embodiment of the present invention;
FIG. 6(a) to FIG. 6(c) are a schematic diagram, in an animation manner, of a widget setting method presented according to another embodiment of the present invention; and
FIG. 7 is a schematic block diagram of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

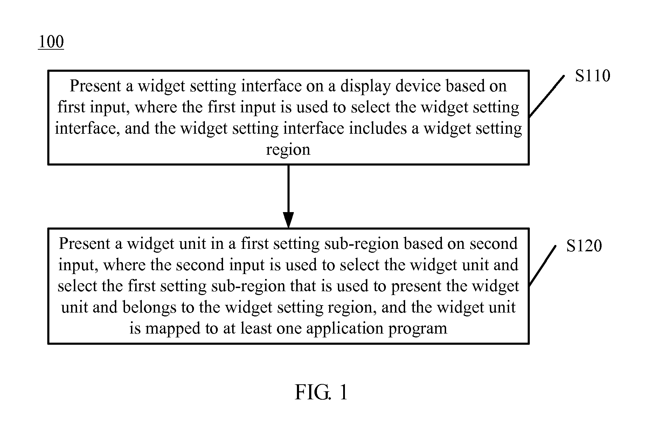

FIG. 1 is a schematic flowchart of a widget (widget) setting method 100 according to an embodiment of the present invention. As shown in FIG. 1, the method 100 includes:

S110: Present a widget setting interface on a display device based on first input, where the first input is used to select the widget setting interface, and the widget setting interface includes a widget setting region.

S120: Present a widget unit in a first setting sub-region based on second input, where the second input is used to select the widget unit and select the first setting sub-region that is used to present the widget unit and belongs to the widget setting region, and the widget unit is mapped to at least one application program.

Specifically, when a user needs to change or set a widget presented on a screen of a terminal device, a widget setting interface may be selected from a widget setting interface library of the terminal device. Different widget setting interfaces may include widget setting regions of different shapes or with different sub-regions. The user can select a widget setting interface including a suitable widget setting region. For example, old people may select a widget setting interface including a relatively large widget setting region. After receiving the first input that is used by the user to select a widget setting interface, the terminal device can display a specific widget setting interface on the screen, so that the user can select a corresponding setting sub-region in a widget setting region on the widget setting interface, and select a widget unit that needs to be displayed in the setting sub-region. For example, when the user taps a region in the widget setting region, the terminal device may pop up a drop-down list in the region according to input of the user, and the user can select, from the drop-down list, a widget unit to be presented in the region, so that the terminal device can present the selected widget unit in a corresponding region based on selection of the user.

In the embodiment of the present invention, the widget unit is a component unit of a home screen widget. A combination of widget units that are set and presented in the widget setting region can be referred to as a combined widget, where the combined widget can be deleted as a whole, and can be entirely added to a user home screen after being saved. One widget unit can be mapped to one or more than one application program.

In the embodiment of the present invention, the widget setting region can be divided into multiple sub-regions, where each sub-region can be referred to as a grid. The number of grids that a widget unit needs to occupy may be preconfigured. Certainly, when the number of available grids cannot satisfy the number of grids that the widget unit needs to occupy, another neighboring widget unit may be covered, or matching is performed between a size of a presented widget unit and the number of available grids.

In the embodiment of the present invention, in S120, the presenting a widget unit in a first setting sub-region may include:
presenting a widget unit set in the widget setting region based on first sub-input of the second input, where the first sub-input is used to select the widget unit set; and
presenting the widget unit in a second setting sub-region based on second sub-input of the second input, where the second sub-input is used to select the widget unit from the widget unit set and the second setting sub-region.

Specifically, the user can tap a region on the widget setting interface; for example, the user can double tap a specific region that is used to present the widget unit set in the widget setting region. When receiving tap input of the user, the terminal device can present the widget unit set on the widget setting interface; for example, the terminal device can pop up a drop-down list including a widget unit at a tap input point of the user. The widget unit set may include a widget unit that is available for user selection. The widget unit in the widget unit set may be preset by a system, and may also be added by the user based on a personal requirement; in addition, the widget unit in the widget unit set may be presented in a text form, and may also be presented in an image form. The user can tap to select a required widget unit from the widget unit set, and tap the first setting sub-region that is used to present the widget unit. Therefore, after receiving tap input of a user equipment, the terminal device can present the widget unit selected by the user in the first setting sub-region.

In the embodiment of the present invention, in S110, the presenting a widget setting interface on a display device based on first input, where the first input is used to select the widget setting interface, and the widget setting interface includes a widget setting region may include:
presenting the widget setting interface on the display device based on the first input, where the first input is used to select the widget setting interface, and the widget setting interface includes the widget setting region and a widget unit candidate region.

In this case, in S120, the presenting a widget unit in a first setting sub-region may include:
detecting a first touch track of an input apparatus for the widget unit, where the first touch track is the second input, a start point of the first touch track indicates a region, in which the widget unit is located, of the widget unit candidate region, and an end point of the second touch track indicates the first setting sub-region; and
presenting the widget unit in the first setting sub-region based on the first touch track.

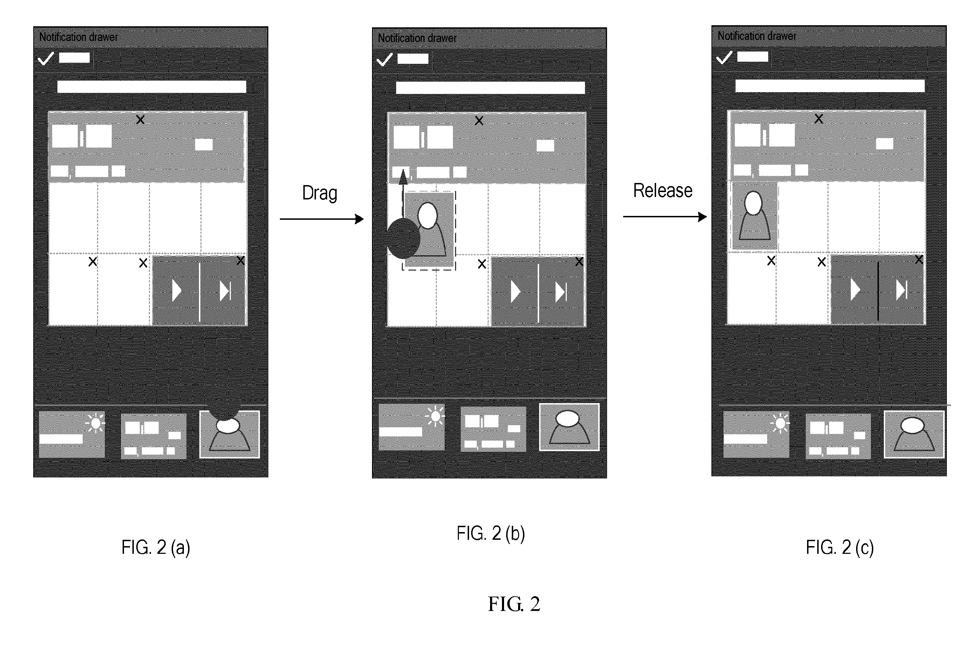

Specifically, the widget setting interface selected by the user not only includes the widget setting region, but also may include the widget unit candidate region. The widget unit candidate region includes various widget units that are available for user selection. A widget unit that is available for user selection in the widget unit candidate region may be preset by the system, and may also be added by the user based on a personal requirement. After the terminal device presents, based on the first input of the user, the widget setting interface including the widget setting region and the widget unit candidate region on the screen, the user may select a widget unit required by the user from the widget unit candidate region. For example, as shown in FIG. 2(a) to FIG. 2(c), after selecting a widget unit shown in FIG. 2(a), the user drags the widget unit to a region shown in FIG. 2(b) and then releases the widget unit; after detecting that a moving signal based on the widget unit is static, the terminal device can present the widget unit in a corresponding grid (as shown in FIG. 2(c)) according to a preconfigured size of the widget unit.

In the embodiment of the present invention, the user can also tap a region of the widget setting region to implement selection of a setting sub-region that is used to present the widget unit, and tap a widget unit presented in the widget unit candidate region to implement selection of a widget unit that is to be presented in the widget setting region; after detecting a touch signal of the user, the terminal device presents the widget unit in a corresponding region according to a preconfigured size of the widget unit, where the region tapped by the user may be a center of the region in which the widget unit is presented.

It should be understood that, in the embodiment of the present invention, when the user releases the widget unit and the widget unit does not fill a grid to the full, the terminal device can determine, according to a proportion of an occupied area of the grid, whether to occupy the grid. For example, when the occupied area of the grid exceeds half of an area of the grid, a region occupied by the widget unit may be adjusted to fill the grid to the full. For example, as shown in FIG. 2(b) and FIG. 2(c), after the user releases the widget unit, that is, after the terminal device detects that a moving signal based on the widget unit is static, the terminal device adjusts a region in which the widget unit is presented.

In the embodiment of the present invention, one or more widget units that are presented in the widget setting region may further be rearranged.

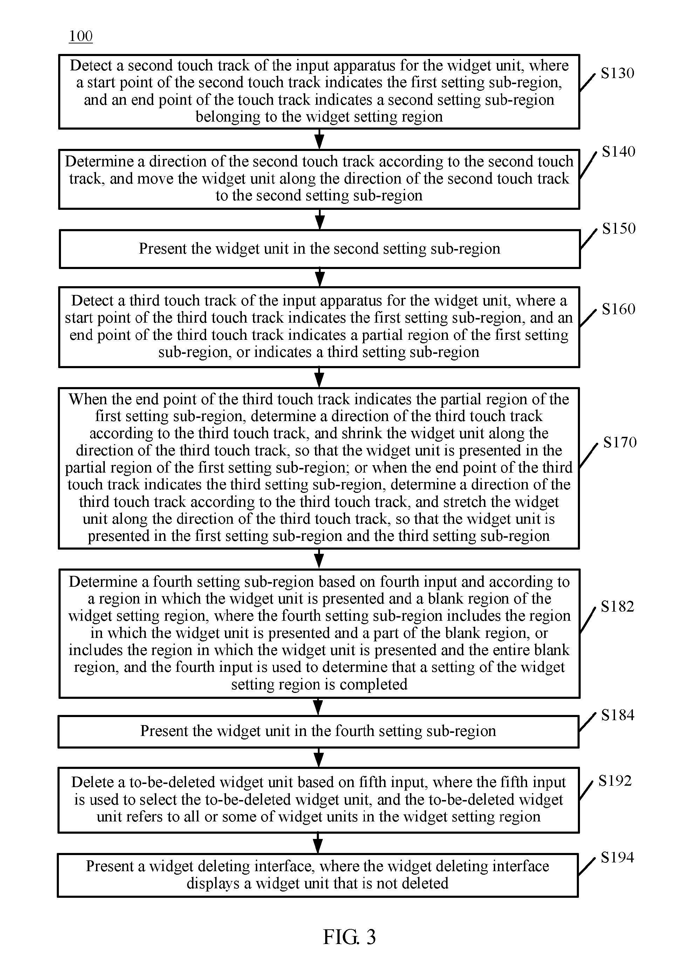

For example, as shown in FIG. 3, in the embodiment of the present invention, besides S110 and S120, the method 100 may further include:

S130: Detect a second touch track of the input apparatus for the widget unit, where a start point of the second touch track indicates the first setting sub-region, and an end point of the touch track indicates a second setting sub-region belonging to the widget setting region.

S140: Determine a direction of the second touch track according to the second touch track, and move the widget unit along the direction of the second touch track to the second setting sub-region.

S150: Present the widget unit in the second setting sub-region.

For another example, as shown in FIG. 3, in the embodiment of the present invention, the method 100 may further include:

S160: Detect a third touch track of the input apparatus for the widget unit, where a start point of the third touch track indicates the first setting sub-region, and an end point of the third touch track indicates a partial region of the first setting sub-region, or indicates a third setting sub-region; and when the end point of the third touch track falls within the first setting sub-region, the partial region of the first setting sub-region that is indicated by the end point of the third touch track may be a region between the end point of the third touch track and an edge of the first setting sub-region.

S170: When the end point of the third touch track indicates the partial region of the first setting sub-region, determine a direction of the third touch track according to the third touch track, and shrink the widget unit along the direction of the third touch track to the end point of the third touch track, so that the widget unit is presented in the partial region of the first setting sub-region; or when the end point of the third touch track indicates the third setting sub-region, determine a direction of the third touch track according to the third touch track, and stretch the widget unit along the direction of the third touch track, so that the widget unit is presented in the first setting sub-region and the third setting sub-region.

In the embodiment of the present invention, a range in which a touch point of the touch track falls in the widget unit may also be preset, so as to determine whether to drag the widget unit as a whole or just stretch or shrink the widget unit.

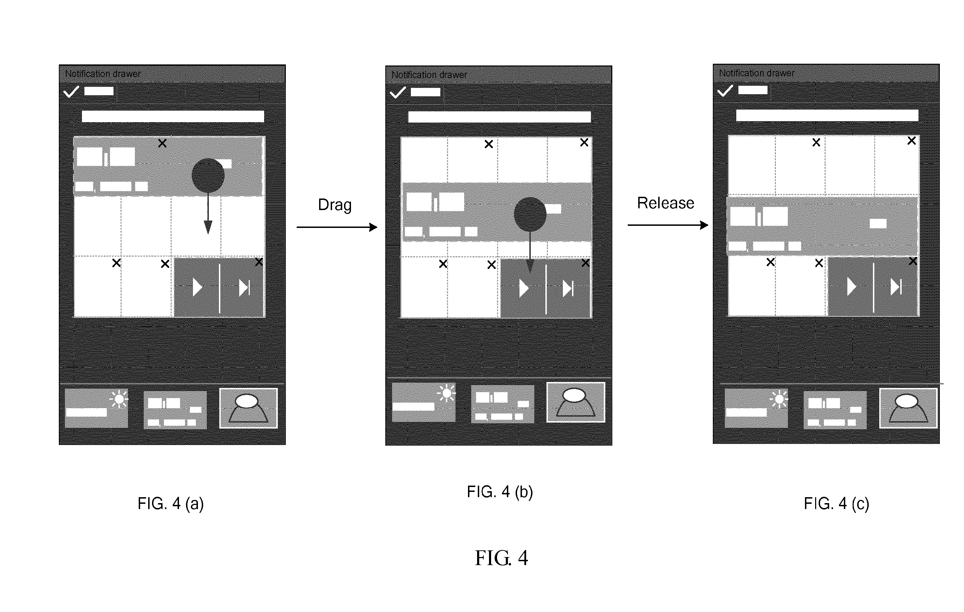

For example, when the touch point falls in a region, except a boundary, of the widget unit, the widget unit can be dragged as a whole to a new setting region. When detecting a touch track of the user equipment for the widget unit, the terminal device moves the widget unit to the new setting sub-region according to a direction of the touch track, and presents the widget unit in the new setting sub-region. For example, as shown in FIG. 4(a) to FIG. 4(c), by touching a middle region of a widget unit that displays time information (as shown in FIG. 4(a)), the user drags the widget unit as a whole to a corresponding position (as shown in FIG. 4(b)); after detecting that a moving signal based on the widget unit is static, the terminal device presents the widget unit in a corresponding region (as shown in FIG. 4(c)).

For another example, when the touch point of the touch track falls on a frame of the widget unit, the widget unit can only be stretched or shrunk along a direction of the touch track.

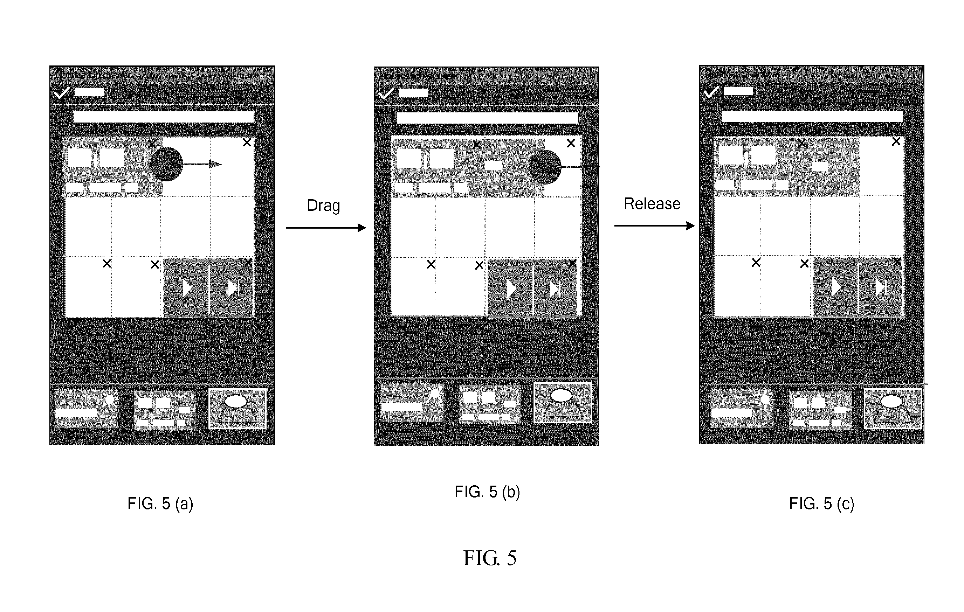

For example, as shown in FIG. 5(a) to FIG. 5(c), the user drags an edge of a widget unit that is used to display time information (as shown in FIG. 5(a)), and widens or stretches the widget unit to a position along a dragging direction (as shown in FIG. 5(b)); after detecting that a moving signal based on the widget unit is static, the terminal device presents the widget unit in a corresponding region (as shown in FIG. 5(c)).

In the embodiment of the present invention, when the user drags the widget unit to change a size of the widget unit, the terminal device may change a size of content displayed in the widget unit (for example, a font size and an image size), and certainly, a part of displayed content may be hidden or content that has not been displayed may be displayed.

For example, information of a widget unit displayed in the first setting sub-region is an inbox, where the widget unit displays mail information. In a dragging process, with an increase in an occupied region, displayed information may be added; for example, an outbox and a draft may further be displayed, and when only one of the outbox and the draft can be added for displaying, the terminal device can choose, according to a priority of the outbox or the draft, to add displaying of the draft or to add displaying of the outbox, where the priority may be preset by the user, or may be preset by the system.

In the embodiment of the present invention, as shown in FIG. 3, the method 100 may further include:

S182: Determine a fourth setting sub-region based on fourth input and according to a region in which the widget unit is presented and a blank region of the widget setting region, where the fourth setting sub-region includes the region in which the widget unit is presented and a part of the blank region, or includes the region in which the widget unit is presented and the entire blank region, and the fourth input is used to determine that a setting of the widget setting region is completed.

S184: Present the widget unit in the fourth setting sub-region.

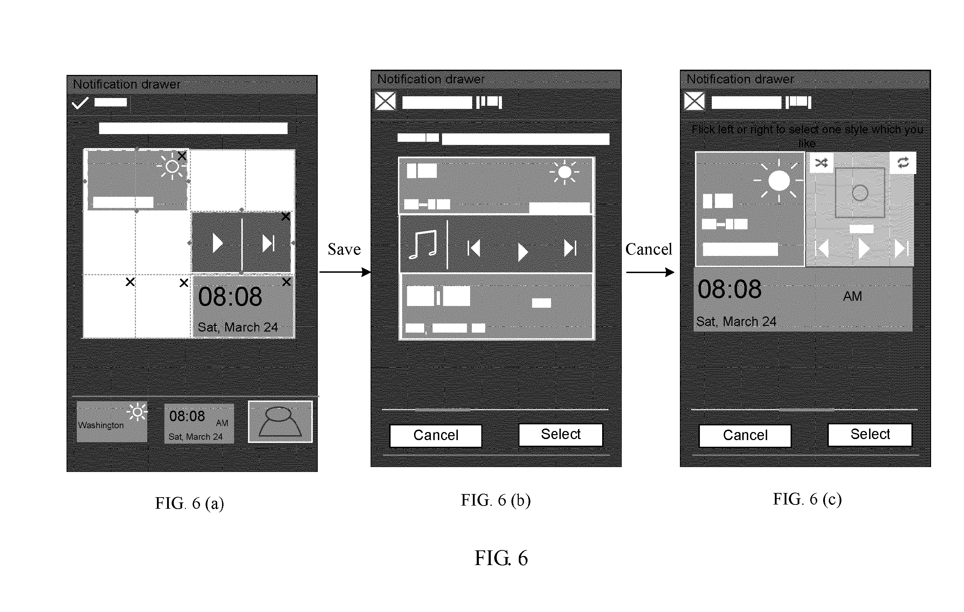

Specifically, when the user determines that the setting of the widget unit in the widget setting region is completed and saves a setting of the widget setting region, and after the terminal device receives input of the user that is used to save the setting of the widget setting region, the terminal device can determine a new presenting region for all or some of widget units again according to a region in which a widget unit is set and a region in which no widget unit is set. Therefore, a layout of home screen widgets can be more pleasing to the eye and compact, which can better meet a requirement of the user. For example, as shown in FIG. 6(a), FIG. 6(b), and FIG. 6(c), FIG. 6(a) is a setting of the widget setting region, which the user determines to save; FIG. 6(b) and FIG. 6(c) are settings of the widget setting region that are rearranged by the terminal device. That is, after determining that the setting of the widget setting region is completed, the user can tap to save the widget setting interface (for example, as shown in FIG. 6(a)); after receiving tap-to-save input of the user equipment, the terminal device can determine that the setting of the widget setting region is completed, and can determine and present a widget layout (for example, as shown in FIG. 6(b)) again according to a region in which a widget unit is set and a region in which no widget unit is set; the user can save the new widget layout, and if the user is not satisfied with the new widget layout, the user can tap to cancel the new widget layout; after receiving input of the user that is used to cancel the new widget layout, the terminal device can determine and present a new widget layout (for example, as shown in FIG. 6(c)) again for user selection.

In the embodiment of the present invention, as shown in FIG. 3, the method 100 may further include:

S192: Delete a to-be-deleted widget unit based on fifth input, where the fifth input is used to select the to-be-deleted widget unit, and the to-be-deleted widget unit refers to all or some of widget units in the widget setting region.

S194: Present a widget deleting interface, where the widget deleting interface displays a widget unit that is not deleted.

Specifically, when the user needs to delete some of or all widget units from the widget setting region, the user may delete to-be-deleted objects one by one, or may delete to-be-deleted objects as a whole. That is, the user can tap a frame of the widget setting region, the terminal device can present a deleting pointer on the frame of the widget setting region according to tap input of the user, and then the user can choose to delete all widget units in the widget region; when receiving input of the user that is used to instruct the terminal device to delete all widget units, the terminal device can send a deletion command to corresponding widget units in a broadcast receiver manner, so that the terminal device can present the widget deleting interface to implement a one-tap deletion operation of the user. Certainly, the user may delete only some of the widget units according to a requirement of the user, which is determined according to a specific situation, and is not limited in the embodiment of the present invention.

Therefore, in the widget setting method of the embodiment of the present invention, a widget setting region used by a user to set a home screen widget is presented on a display device, and a widget unit selected by the user is presented in a corresponding region of the widget setting region according to input of the user; therefore, content, a shape, and a mapped application program of the home screen widget can be user-defined, which meets a requirement of the user. Because a widget unit of the home screen widget is set in a same region, the home screen widget can be deleted by one tap, which can reduce operations of the user.

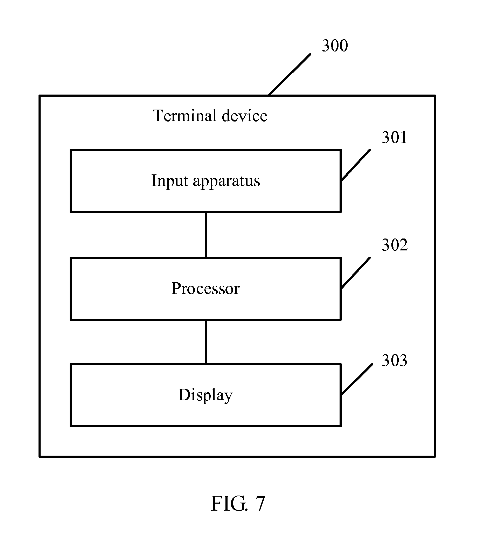

FIG. 7 is a schematic block diagram of a terminal device according to an embodiment of the present invention. As shown in FIG. 7, the terminal device 200 includes at least the following apparatuses: an input apparatus 301, a processor 302, and a display 303.

Specifically, when the terminal device is a touch-based interactive terminal, an interactive touchscreen may be the display 303 and may also be the input apparatus 301 at the same time.

The input apparatus 301 is configured to generate first input, where the first input is used to select a widget setting interface, and the widget setting interface includes a widget setting region.

The processor 302 is configured to instruct, based on the first input generated by the input apparatus 301, the display 303 to present the widget setting interface.

The display 303 is configured to present the widget setting interface according to an instruction of the processor 302.

The input apparatus 301 is further configured to generate second input, where the second input is used to select a widget unit and select a first setting sub-region that is used to present the widget unit and belongs to the widget setting region, and the widget unit is mapped to at least one application program.

The processor 302 is further configured to instruct, according to the second input generated by the input apparatus 301, the display 303 to present the widget unit in the first setting sub-region.

The display 303 is further configured to present the widget unit in the first setting sub-region according to an instruction of the processor 302.

Optionally, the widget setting interface further includes a widget unit candidate region.

The input apparatus 301 is specifically configured to generate a first touch track for the widget unit, where the first touch track is the second input, a start point of the first touch track indicates a region, in which the widget unit is located, of the widget unit candidate region, and an end point of the second touch track indicates the first setting sub-region.

The processor 302 is specifically configured to instruct, based on the first touch track generated by the input apparatus 301, the display 303 to present the widget unit in the first setting sub-region indicated by the end point of the first touch track.

The display 303 is specifically configured to present, according to an instruction of the processor 302, the widget unit in the first setting sub-region indicated by the end point of the first touch track.

Optionally, the input apparatus 301 is specifically configured to generate first sub-input included in the second input, where the first sub-input is used to select a widget unit set.

The processor 302 is specifically configured to instruct, based on the first sub-input generated by the input apparatus 301, the display 303 to present the widget unit set in the widget setting region.

The display 303 is specifically configured to present the widget unit set in the widget setting region based on an instruction of the processor 302.

The input apparatus 301 is further specifically configured to generate second sub-input included in the second input, where the second sub-input is used to select the widget unit from the widget unit set and the first setting sub-region.

The processor 302 is further specifically configured to instruct, according to the second sub-input generated by the input apparatus 301, the display 303 to present the widget unit in the first setting sub-region.

The display 303 is further specifically configured to present the widget unit in the second setting sub-region based on an instruction of the processor 302.

Optionally, the input apparatus 301 is further configured to generate a second touch track for the widget unit, where a start point of the second touch track indicates the first setting sub-region, and an end point of the touch track indicates a second setting sub-region belonging to the widget setting region.

The processor 302 is further configured to determine a direction of the second touch track according to the second touch track generated by the input apparatus 301, move the widget unit along the direction of the second touch track to the second setting sub-region, and instruct the display 303 to present the widget unit in the second setting sub-region.

The display 303 is further configured to present the widget unit in the second setting sub-region based on an instruction of the processor 302.

Optionally, the input apparatus 301 is further configured to generate a third touch track for the widget unit, where a start point of the third touch track indicates the first setting sub-region, and an end point of the third touch track indicates a partial region of the first setting sub-region, or indicates a third setting sub-region that does not overlap the first setting sub-region and belongs to the widget setting region; and
when the end point of the third touch track indicates the partial region of the first setting sub-region, the processor 302 is further configured to determine a direction of the third touch track according to the third touch track, shrink the widget unit along the direction of the third touch track to fill the partial region of the first setting sub-region to the full, and instruct the display 303 to present the widget unit in the partial region of the first setting sub-region, and the display 303 is further configured to present the widget unit in the partial region of the first setting sub-region according to an instruction of the processor 302; or
when the end point of the third touch track indicates the third setting sub-region, the processor 302 is further configured to determine a direction of the third touch track according to the third touch track, stretch the widget unit along the direction of the third touch track to fill the first setting sub-region and the third setting sub-region to the full, and instruct the display 303 to present the widget unit in the first setting sub-region and the third setting sub-region, and the display 303 is further configured to present the widget unit in the first setting sub-region and the third setting sub-region according to an instruction of the processor 302.

Optionally, the processor 302 is further configured to determine, when stretching the widget unit, to-be-added-for-display content of the widget unit, and instruct the display 303 to add displaying of the to-be-added-for-display content; the display 303 is further configured to add the displaying of the to-be-added-for-display content in the widget unit according to an instruction of the processor 302.

Alternatively, the processor 302 is further configured to determine, when shrinking the widget unit, to-be-reduced displayed content of the widget unit, and instruct the display 303 to remove displaying of the to-be-reduced displayed content; the display 303 is further configured to remove the displaying of the to-be-reduced displayed content from the widget unit according to an instruction of the processor 302.

Optionally, the input apparatus 301 is further configured to generate fourth input, where the fourth input is used to determine that a setting of the widget setting region is completed.

The processor 302 is further configured to: determine a fourth setting sub-region based on the fourth input generated by the input apparatus 301 and according to a region in which the widget unit is presented and a blank region of the widget setting region, where the fourth setting sub-region includes the region in which the widget unit is presented and the entire blank region, or includes the region in which the widget unit is presented and a part of the blank region; and instruct the display 303 to present the widget unit in the fourth setting sub-region.

The display 303 is further configured to present the widget unit in the fourth setting sub-region according to an instruction of the processor 302.

Optionally, the input apparatus 301 is further configured to generate fifth input, where the fifth input is used to select a to-be-deleted widget unit, and the to-be-deleted widget unit refers to all or some of widget units in the widget setting region.

The processor 302 is further configured to delete the to-be-deleted widget unit according to the fifth input generated by the input apparatus 301, and instruct the display 303 to present a widget deleting interface, where the widget deleting interface is used to display a widget unit that is not deleted.

The display 303 is further configured to present the widget deleting interface according to an instruction of the processor 302, where the widget deleting interface displays a widget unit that is not deleted.

Therefore, in the terminal device of the embodiment of the present invention, a widget setting region used by a user to set a home screen widget is presented on a display device, and a widget unit selected by the user is presented in a corresponding region of the widget setting region according to input of the user; therefore, content, a shape, and a mapped application program of the home screen widget can be user-defined, which meets a requirement of the user. Because a widget unit of the home screen widget is set in a same region, the home screen widget can be deleted by one tap, which can reduce operations of the user.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A widget setting method, comprising:
presenting a widget setting interface on a display device based on first input, wherein the first input is used to select the widget setting interface, and the widget setting interface comprises a widget setting region; and
presenting a widget unit in a first setting sub-region based on second input, wherein the second input is used to select the widget unit and select the first setting sub-region that is used to present the widget unit and belongs to the widget setting region, and the widget unit is mapped to at least one application program.

2. The method according to claim 1, wherein the presenting a widget setting interface on a display device based on first input, wherein the first input is used to select the widget setting interface, and the widget setting interface comprises a widget setting region comprises:
presenting the widget setting interface on the display device based on the first input, wherein the first input is used to select the widget setting interface, and the widget setting interface comprises the widget setting region and a widget unit candidate region; and
the presenting a widget unit in a first setting sub-region comprises:
detecting a first touch track of an input apparatus for the widget unit, wherein the first touch track is the second input, a start point of the first touch track indicates a region, in which the widget unit is located, of the widget unit candidate region, and an end point of the second touch track indicates the first setting sub-region; and
presenting the widget unit in the first setting sub-region based on the first touch track.

3. The method according to claim 1, wherein the presenting a widget unit in a first setting sub-region comprises:
presenting a widget unit set in the widget setting region based on first sub-input of the second input, wherein the first sub-input is used to select the widget unit set; and
presenting the widget unit in the first setting sub-region based on second sub-input of the second input, wherein the second sub-input is used to select the widget unit from the widget unit set and the first setting sub-region.

4. The method according to any one of claims 1 to 3, wherein the method further comprises:
detecting a second touch track of the input apparatus for the widget unit, wherein a start point of the second touch track indicates the first setting sub-region, and an end point of the touch track indicates a second setting sub-region belonging to the widget setting region;
determining a direction of the second touch track according to the second touch track, and moving the widget unit along the direction of the second touch track to the second setting sub-region; and
presenting the widget unit in the second setting sub-region.

5. The method according to any one of claims 1 to 4, wherein the method further comprises:
detecting a third touch track of the input apparatus for the widget unit, wherein a start point of the third touch track indicates the first setting sub-region, and an end point of the third touch track indicates a partial region of the first setting sub-region, or indicates a third setting sub-region; and
when the end point of the third touch track indicates the partial region of the first setting sub-region, determining a direction of the third touch track according to the third touch track, and shrinking the widget unit along the direction of the third touch track to the end point of the third touch track, so that the widget unit is presented in the partial region of the first setting sub-region; or
when the end point of the third touch track indicates the third setting sub-region, determining a direction of the third touch track according to the third touch track, and stretching the widget unit along the direction of the third touch track, so that the widget unit is presented in the first setting sub-region and the third setting sub-region.

6. The method according to claim 5, wherein the shrinking the widget unit along the direction of the third touch track comprises:
shrinking the widget unit along the direction of the third touch track, and reducing content displayed in the widget unit; and
the stretching the widget unit along the direction of the third touch track comprises:
stretching the widget unit along the direction of the third touch track, and adding content displayed in the widget unit.

7. The method according to any one of claims 1 to 6, wherein the method further comprises:
determining a fourth setting sub-region based on fourth input and according to a region in which the widget unit is presented and a blank region of the widget setting region, wherein the fourth setting sub-region comprises the region in which the widget unit is presented and the entire blank region, or the fourth setting sub-region comprises the region in which the widget unit is presented and a part of the blank region, and the fourth input is used to determine that a setting for the widget setting region is completed; and
presenting the widget unit in the fourth setting sub-region.

8. The method according to any one of claims 1 to 7, wherein the method further comprises:
deleting a to-be-deleted widget unit based on fifth input, wherein the fifth input is used to select the to-be-deleted widget unit, and the to-be-deleted widget unit refers to all or some of widget units in the widget setting region; and
presenting a widget deleting interface, wherein the widget deleting interface displays a widget unit that is not deleted.

9. A terminal device, comprising:
an input apparatus, configured to generate first input, wherein the first input is used to select a widget setting interface, and the widget setting interface comprises a widget setting region;
a processor, configured to instruct, based on the first input generated by the input apparatus, a display to present the widget setting interface; and
the display, configured to present the widget setting interface according to an instruction of the processor, wherein
the input apparatus is further configured to generate second input, wherein the second input is used to select a widget unit and select a first setting sub-region that is used to present the widget unit and belongs to the widget setting region, and the widget unit is mapped to at least one application program;
the processor is further configured to instruct, according to the second input generated by the input apparatus, the display to present the widget unit in the first setting sub-region; and
the display is further configured to present the widget unit in the first setting sub-region according to an instruction of the processor.

10. The terminal device according to claim 9, wherein the widget setting interface further comprises a widget unit candidate region;
the input apparatus is specifically configured to generate a first touch track for the widget unit, wherein the first touch track is the second input, a start point of the first touch track indicates a region, in which the widget unit is located, of the widget unit candidate region, and an end point of the second touch track indicates the first setting sub-region;
the processor is specifically configured to instruct, based on the first touch track generated by the input apparatus, the display to present the widget unit in the first setting sub-region indicated by the end point of the first touch track; and
the display is specifically configured to present, according to an instruction of the processor, the widget unit in the first setting sub-region indicated by the end point of the first touch track.

11. The terminal device according to claim 9, wherein:
the input apparatus is specifically configured to generate first sub-input comprised in the second input, wherein the first sub-input is used to select a widget unit set;
the processor is specifically configured to instruct, based on the first sub-input generated by the input apparatus, the display to present the widget unit set in the widget setting region;
the display is specifically configured to present the widget unit set in the widget setting region based on an instruction of the processor;
the input apparatus is further specifically configured to generate a second sub-input comprised in the second input, wherein the second sub-input is used to select the widget unit from the widget unit set and the first setting sub-region;
the processor is further specifically configured to instruct, according to the second sub-input generated by the input apparatus, the display to present the widget unit in the first setting sub-region; and
the display is further specifically configured to present the widget unit in the second setting sub-region based on an instruction of the processor.

12. The terminal device according to any one of claims 9 to 11, wherein:
the input apparatus is further configured to generate a second touch track for the widget unit, wherein a start point of the second touch track indicates the first setting sub-region, and an end point of the touch track indicates a second setting sub-region belonging to the widget setting region;
the processor is further configured to determine a direction of the second touch track according to the second touch track generated by the input apparatus, move the widget unit along the direction of the second touch track to the second setting sub-region, and instruct the display to present the widget unit in the second setting sub-region; and
the display is further configured to present the widget unit in the second setting sub-region based on an instruction of the processor.

13. The terminal device according to any one of claims 9 to 12, wherein:
the input apparatus is further configured to generate a third touch track for the widget unit, wherein a start point of the third touch track indicates the first setting sub-region, and an end point of the third touch track indicates a partial region of the first setting sub-region, or indicates a third setting sub-region; and
when the end point of the third touch track indicates the partial region of the first setting sub-region, the processor is further configured to determine a direction of the third touch track according to the third touch track, shrink the widget unit along the direction of the third touch track to fill the partial region of the first setting sub-region to the full, and instruct the display to present the widget unit in the partial region of the first setting sub-region, and the display is further configured to present the widget unit in the partial region of the first setting sub-region according to an instruction of the processor; or
when the end point of the third touch track indicates the third setting sub-region, the processor is further configured to determine a direction of the third touch track according to the third touch track, stretch the widget unit along the direction of the third touch track to fill the first setting sub-region and the third setting sub-region to the full, and instruct the display to present the widget unit in the first setting sub-region and the third setting sub-region; and the display is further configured to present the widget unit in the first setting sub-region and the third setting sub-region according to an instruction of the processor.

14. The terminal device according to claim 13, wherein:
the processor is further configured to determine, when stretching the widget unit, to-be-added-for-display content of the widget unit, and instruct the display to add displaying of the to-be-added-for-display content; the display is further configured to add the displaying of the to-be-added-for-display content in the widget unit according to an instruction of the processor; or
the processor is further configured to determine, when shrinking the widget unit, to-be-reduced displayed content of the widget unit, and instruct the display to remove displaying of the to-be-reduced displayed content; the display is further configured to remove the displaying of the to-be-reduced displayed content from the widget unit according to an instruction of the processor.

15. The terminal device according to any one of claims 9 to 14, wherein:
the input apparatus is further configured to generate fourth input, wherein the fourth input is used to determine that a setting of the widget setting region is completed;
the processor is further configured to: determine a fourth setting sub-region based on the fourth input generated by the input apparatus and according to a region in which the widget unit is presented and a blank region of the widget setting region, wherein the fourth setting sub-region comprises the region in which the widget unit is presented and the entire blank region, or comprises the region in which the widget unit is presented and a part of the blank region; and instruct the display to present the widget unit in the fourth setting sub-region; and
the display is further configured to present the widget unit in the fourth setting sub-region according to an instruction of the processor.

16. The terminal device according to any one of claims 9 to 15, wherein:
the input apparatus is further configured to generate fifth input, wherein the fifth input is used to select a to-be-deleted widget unit, and the to-be-deleted widget unit refers to all or some of widget units in the widget setting region;
the processor is further configured to delete the to-be-deleted widget unit according to the fifth input generated by the input apparatus, and instruct the display to present a widget deleting interface, wherein the widget deleting interface is used to display a widget unit that is not deleted; and
the display is further configured to present the widget deleting interface according to an instruction of the processor, wherein the widget deleting interface displays a widget unit that is not deleted.
